# DEMANDE DE BREVET EUROPEEN

(11) **EP 1 303 151 A1**
(43) Date de publication de la demande: **16.04.2003**
(21) Numéro de dépôt: 02292488.0
(22) Date de dépôt: 09.10.2002
(51) Int. Cl.: H04Q 7/22

(54) **Système de communication entre un terminal, une borne et un serveur**

(30) Priorité: 12.10.2001 FR 0113180
(71) Demandeur: FRANCE TELECOM, 75015 Paris (FR)
(72) Inventeur: Bjork, Erik, 81600 Montans (FR)
(74) Mandataire: Loisel, Bertrand

(57) **Abrégé**

Le système de communication comprend une borne (1) de transmission sur un circuit de communication locale sans fil (4), au moins un terminal de communication (2) et au moins un serveur distant (3) reliés à un réseau de communication (5) indépendant de la borne. Le terminal est en outre relié à la borne par le circuit de communication locale sans fil. Le terminal reçoit de la borne un menu proposant des services. Certains de ces services requièrent une information de localisation du terminal. La borne détermine ses coordonnées géographiques à partir de signaux radio émis par des satellites. Alternativement, la borne adresse à un serveur de localisation son numéro d'identification. Ce numéro est d'abord transmis au terminal par le circuit de communication locale sans fil, puis relayé par le réseau de communication jusqu'au serveur (3). Le serveur renvoie alors par le même chemin des coordonnées géographiques de la borne.

## Description

La présente invention concerne un système de fourniture de services accessibles par des terminaux de communication sans fil . Elle concerne plus particulièrement un système de localisation de terminaux mobiles par l'intermédiaire de bornes fixes réparties sur une zone et permettant l'accès à des services liés à la localisation du terminal.

Parmi les services pouvant être attachés à l'utilisation d'un terminal de radiocommunication, la localisation de l'utilisateur présente un intérêt inhérent à la mobilité du terminal permise par le système de radiocommunication.

Une telle localisation peut être utile à l'opérateur de communication qui dessert la zone dans laquelle se trouve l'utilisateur d'un terminal de radiocommunication. La motivation de l'opérateur peut être la mise en oeuvre d'une politique tarifaire variable en fonction du lieu d'appel ou de réception d'une communication par un utilisateur de terminal radio (voir EP-A-0 568 824). Un autre intérêt pour l'opérateur réside dans la fourniture de services adaptés au lieu où se trouve l'utilisateur d'un terminal mobile.

Dans une autre approche, un service de localisation peut être fourni à l'utilisateur d'un terminal de radiocommunication sur sa demande. Il a notamment déjà été proposé de joindre au terminal de radiocommunication un récepteur de signaux de positionnement GPS («Global Positioning System») recevant des balises émises par des satellites. Mais la réception de ces balises peut d'une part être perturbée par les conditions atmosphériques, d'autre part un tel système ne présente aucune synergie entre le récepteur GPS et le terminal de radiocommunication.

Le territoire couvert par un réseau cellulaire de radiocommunication est subdivisé en cellules desservies par des émetteurs-récepteurs respectifs de stations de base réparties sur le territoire. La cellule dans laquelle se trouve un abonné donné fournit à l'opérateur une information de localisation de l'abonné. Dans ce cas, la précision de la localisation est limitée par la taille de la cellule qui peut varier entre 2 et 10 kilomètres.

L'information de localisation fournie à l'utilisateur peut être accompagnée par d'autres informations de natures diverses, notamment liées à cette localisation, telles que des programmes d'activités locales, par exemple de nature touristique, culturelle, des informations climatiques, etc.

D'autres systèmes ont encore été proposés, notamment des systèmes mettant en oeuvre un réseau de bornes radio spécifiques. Dans ce cas, un inconvénient est la nécessité pour l'utilisateur de disposer d'un terminal dédié à la communication radio avec ces bornes.

Le document WO 01/01711 propose un système de communication comprenant de telles bornes radio spécifiques, et des terminaux mobiles pouvant communiquer à la fois avec une borne située à proximité et avec un réseau de communication à distance. Dans ce système de communication, la position d'une borne avec laquelle un terminal mobile est en communication locale constitue l'information de localisation de ce terminal.

Un but de la présente invention est de proposer un système de communication procurant des services à des utilisateurs de terminaux de radiocommunication connectés à un réseau de communication, dans lequel des déplacements de certains éléments de communication peuvent être facilement pris en compte.

La présente invention a pour objet un système de communication comprenant une borne, au moins un terminal de communication et au moins un serveur distant. Le terminal et la borne comprennent chacun des moyens de communication locale sans fil. Le terminal et le serveur comprennent chacun des moyens de communication par l'intermédiaire d'un réseau de communication indépendant de la borne. En outre, le terminal comprend
- des moyens d'émission par communication locale sans fil d'une interrogation à destination de la borne,
- des moyens de réception par communication locale sans fil de données fournies par la borne en réponse à l'interrogation, et
- des moyens de transmission au serveur par le réseau de communication d'au moins une partie des données fournies par la borne en réponse à l'interrogation,
et la borne comprend des moyens de réception de signaux radio de localisation issus d'une constellation de satellites ainsi que des moyens de calcul des coordonnées géographiques de ladite borne sur la base desdits signaux radio de localisation.

Par terminal de communication est désigné tout appareil permettant l'accès à un réseau de communication, pouvant être un réseau de radiocommunication, par exemple un réseau de type GSM («Global System for Mobile communication»), GPRS (« General Packet Radio Service») ou UMTS («Universal Mobile Telecommunications System»). Ce terminal peut être un terminal mobile, mais aussi un micro-ordinateur ou un assistant personnel relié à un réseau de communication par un dispositif de type modem. Ce terminal est muni d'un dispositif de présentation de menu, par exemple sous forme visuelle, tel qu'un écran, ou sous forme vocale, tel qu'un haut-parleur. Il est aussi muni d'un dispositif d'entrée d'une sélection dans un menu présenté à l'utilisateur, par exemple par l'intermédiaire d'un clavier ou d'un dispositif de saisie vocale.

Le système de communication locale sans fil entre la borne et un terminal peut être de différentes natures, notamment par radio ou par infrarouge. La portée de ce système de communication locale est préférablement faible, par exemple de quelques mètres à quelques centaines de mètres en zone urbaine. Ainsi, si les services faisant intervenir les bornes doivent être rendus en de nombreux endroits, il faudra déployer d'assez nombreuses bornes et il importe que les bornes soient aussi simples que possible, afin de ne pas nécessiter des interventions de maintenance trop fréquentes et de présenter un prix de revient faible.

Grâce aux moyens de réception de signaux radio de localisation issus d'une constellation de satellites et aux moyens de calcul des coordonnées géographiques dont est équipée la borne, les nouvelles coordonnées géographiques de la borne peuvent être immédiatement déterminées après un déplacement de celle-ci. Les services proposés et fournis à l'utilisateur du terminal mobile intègrent alors automatiquement et sans délai la nouvelle position de la borne déplacée.

Un avantage de la présente invention réside dans le fait que l'opérateur de la borne peut être distinct de l'opérateur du réseau de communication auquel est relié le terminal, et en particulier par lequel il peut entrer en communication avec le serveur distant. Les informations ou services délivrés par la borne à l'utilisateur du terminal de communication peuvent ainsi être payants et facturés par l'opérateur de la borne au détenteur du terminal de communication. Elles peuvent aussi être facturées en partie ou dans leur intégralité à l'opérateur du réseau de communication selon la nature du service délivré et de son bénéficiaire.

Parmi les services apportés par le réseau de bornes, la localisation de l'utilisateur du terminal est un service destiné à la fois à l'opérateur du réseau de communication, l'opérateur du serveur distant et l'utilisateur du terminal. Il permet une offre de services à cet utilisateur, sur sa demande, appropriée en fonction du lieu exact où il se trouve.

Dans un mode de mise en oeuvre particulier, chaque borne comporte un numéro d'identification inscrit dans une partie de son dispositif de mémoire. Ce numéro peut être fixé lors de la fabrication de la borne et ainsi être indépendant du lieu d'installation de celle-ci.

Suite à l'établissement d'une communication locale sans fil entre un terminal et la borne qui lui est la plus proche, un menu d'accueil proposant des services est transmis par la borne à l'utilisateur du terminal. Ce menu d'accueil est initialement enregistré dans le dispositif de mémoire de la borne, et envoyé à l'utilisateur du terminal par la communication locale sans fil. Ce menu peut soit apparaître sur l'écran du terminal, soit être communiqué à l'utilisateur sous forme vocale dans le cas d'un terminal équipé d'un haut-parleur.

La borne peut comprendre en outre des moyens pour modifier le menu d'accueil en fonction d'une indication de niveau d'autorisation de dialogue transmise par le terminal. Il est à noter que de tels moyens peuvent être indépendants de la réception par la borne et de l'utilisation de signaux radio de localisation émis par des satellites.

Le menu d'accueil peut proposer notamment des services d'intérêt local, c'est-à-dire des services destinés à un utilisateur situé à proximité de la borne. De tels services peuvent correspondre à des programmes et des données enregistrés au niveau de la borne. Dans ce cas, la fourniture de tels services est effectuée par communication locale sans fil entre la borne et le terminal.

Parmi les options de ce menu, un service de localisation peut aussi être proposé à l'utilisateur. La localisation peut encore être requise indirectement par l'utilisateur lors de la sélection d'un autre service la nécessitant.

Dans la mise en oeuvre préférée de l'invention, suite à la sélection par l'utilisateur du terminal d'un service comprenant sa localisation, un appel est initié par l'intermédiaire du réseau de communication entre le terminal et un serveur distant dédié en partie à ce service de localisation. Le numéro d'appel de ce serveur est communiqué par la borne au terminal suite à la sélection du service comprenant la localisation de l'utilisateur. La borne indique alors au terminal, par communication locale sans fil, son numéro d'identification que le terminal relaie au serveur par le réseau de communication.

Le serveur de localisation comporte par exemple une table enregistrée de correspondance entre des codes d'identification de bornes et des coordonnées géographiques de bornes. Il comprend aussi des moyens de transmission au terminal, en réponse à la réception de la part de ce terminal du code d'identification de la borne, des coordonnées géographiques de la borne correspondant à ce code d'identification. Il peut aussi transmettre au terminal, selon le service sélectionné par l'utilisateur, des informations ou un menu de sélection de services adaptés en fonction du résultat de la localisation.

L'utilisateur du terminal peut aussi sélectionner dans le menu communiqué par la borne un service qui n'est pas fourni par la borne, ou qui nécessite des informations non disponibles au niveau de la borne. La borne communique alors au terminal, par le circuit de communication locale sans fil, le numéro d'appel d'un serveur dédié à la fourniture de ce service ou de cette information. Un appel par le réseau de communication est alors initié par le terminal à destination du serveur afin de poursuivre le service demandé ou de recevoir l'information requise.

Dans le cas où la fourniture du service est intégralement assurée par le serveur, la communication locale sans fil avec la borne est interrompue. La fourniture du service par le serveur peut être poursuivie soit immédiatement, à la suite de la sélection du service dans le menu communiqué par la borne, soit de façon différée par un appel du terminal au serveur à un moment ultérieur choisi par l'utilisateur du terminal. Dans ce cas, le terminal enregistre dans son dispositif de mémoire les données, notamment le numéro d'appel du serveur, l'identification de la borne et la nature du service demandé, nécessaires pour la fourniture ultérieure du service à l'utilisateur. Enfin, dans le cas où la délivrance du service requis par l'utilisateur nécessite des interventions successives de la borne et du serveur selon les éléments de service disponibles respectivement au niveau de la borne et au niveau du serveur, le terminal peut entretenir simultanément ou par séquences successives et alternées la communication locale sans fil avec la borne et la communication par le réseau avec le serveur. Il recueille ainsi tous les éléments nécessaires pour délivrer le service complet à l'utilisateur. Afin que la communication locale sans fil avec la borne ne soit pas rompue à cause d'un mouvement d'éloignement de l'utilisateur du terminal par rapport à la borne, un message peut être communiqué à l'utilisateur pendant les échanges avec la borne et le serveur lui demandant de ne pas se déplacer, ou de restreindre ses déplacements afin de rester à portée d'émission de la borne.

Un tel message peut aussi être mis en oeuvre lors de données fournies par la borne seule au terminal. Il sera nécessaire lorsque la durée d'échange de signaux entre la borne et le terminal est suffisante pour que la communication risque d'être rompue à cause d'un mouvement d'éloignement de l'utilisateur du terminal.

Dans un autre mode de mise en oeuvre, la borne comprend des moyens de communication à distance avec le serveur, par exemple par radiocommunication. Elle comprend alors
- des moyens de transmission de données au serveur en réponse à une interrogation émise par le terminal à destination de la borne par communication locale sans fil,
- des moyens de réception d'éléments de réponse émis par le serveur à destination de la borne en réponse aux données transmises par la borne au serveur,
- des moyens de traitement des éléments de réponse fournis par le serveur pour produire une réponse à l'interrogation du terminal, et
- des moyens de transmission de la réponse au terminal par communication locale sans fil.
Ainsi la borne peut procéder elle-même à un appel du serveur en réponse à une demande de service émise par le terminal à destination de la borne par communication locale sans fil. Elle retransmet alors au terminal les éléments de service fournis par le serveur.

La présente invention concerne aussi un terminal de communication adapté à un système de communication selon l'invention.

D'autres particularités et avantages de la présente invention apparaîtront dans la description ci-après d'exemples de réalisation non limitatifs, en référence aux dessins annexés, dans lesquels :
- la figure 1 est un schéma synoptique d'un système de communication selon l'invention ;
- la figure 2 est un schéma synoptique d'une borne selon l'invention ;
- la figure 3 est un schéma synoptique d'un terminal mobile selon l'invention ;
- la figure 4 est un schéma synoptique d'une variante de borne selon l'invention.

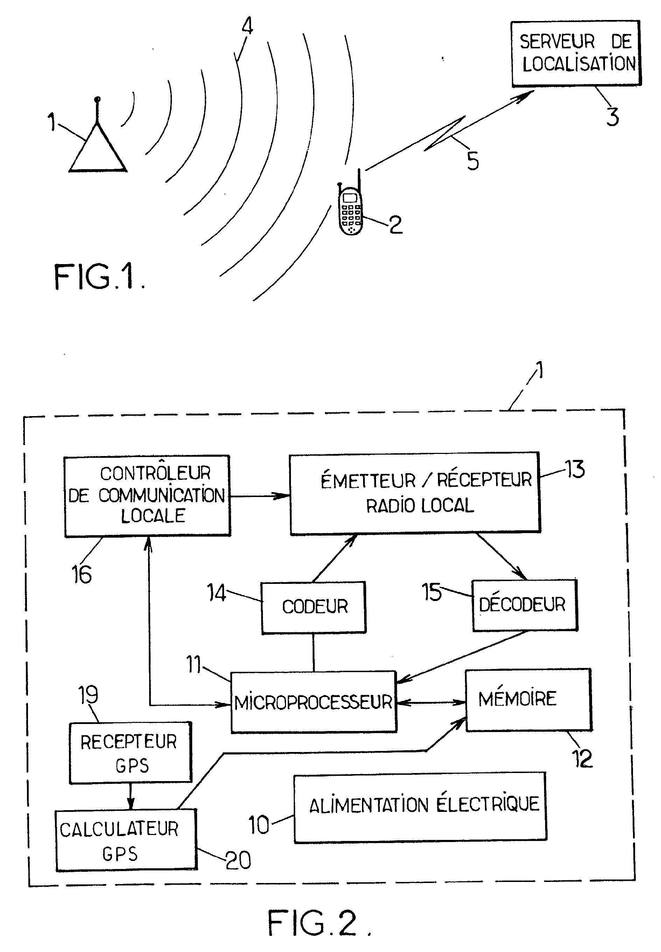

Dans l'exemple de la figure 1, le terminal de communication considéré est un terminal mobile 2 donnant accès au réseau de télécommunication mobile 5. Il est doté d'un écran de visualisation et d'un clavier de saisie. Un serveur de localisation 3 est aussi relié au réseau 5, et accessible par ce réseau en composant le numéro d'appel qui lui est dédié.

Le terminal mobile 2 est par ailleurs relié à une borne 1 par le circuit radio de communication locale 4. Ce circuit radio 4 est par exemple conçu selon la technologie «Bluetooth» (marque déposée, et voir les caractéristiques techniques «Bluetooth Specifications », version 1.0, publiées en 1999 par le Bluetooth Special Interest Group). Dans cette technologie, le circuit de communication locale 4 utilise la bande radio 2,4 GHz pour une transmission bidirectionnelle à très courte portée. Pour réaliser la desserte d'une zone géographique, notamment urbaine, un grand nombre de bornes 1 sont disposées, par exemple sur la voie publique ou dans certains locaux tels que des gares ou des aéroports.

Dans le mode de réalisation préféré de la figure 2, la borne 1 est réalisée de façon très simple à partir de composants de grande série à faible prix. Elle est alimentée en énergie électrique par le circuit d'alimentation 10 relié par ailleurs au secteur. Le microprocesseur 11 commande les opérations effectuées dans la borne. Il est relié à la mémoire 12 qui lui fournit les données et les programmes nécessaires à ces opérations. La mémoire 12 comprend une partie de type ROM («Read Only Memory») dans laquelle sont inscrites les données permanentes nécessaires au fonctionnement de la borne, dont le numéro d'identification de la borne, un menu d'accueil, les séquences d'entrée en communication avec un terminal situé à portée d'émission de la borne, etc. La mémoire 12 comprend aussi une partie réinscriptible, de type RAM («Random Access Memory») pour l'enregistrement de données ou de programmes devant être actualisés. De telles données sont par exemple des numéros d'appel de serveurs intervenant lors de la fourniture de certains services.

Afin de déterminer la position géographique du lieu dans lequel cette borne est nouvellement installée, la borne 1 comporte un récepteur 19 de signaux radio de localisation. Ces signaux de localisation peuvent être émis par une constellation de satellites, comme dans le cas du système GPS («Global Positioning System»). Ce récepteur 19 est relié au calculateur de coordonnées géographiques 20 qui transmet à une partie réinscriptible de la mémoire 12 les coordonnées géographiques de la borne 1 ainsi déterminées.

Le microprocesseur transmet au codeur 14 des données à émettre sur le circuit radio local 4 par l'émetteur-récepteur 13. Ces données sont codées par le codeur 14 en signaux d'émission, en utilisant par exemple un codage en fréquences vocales ou une représentation numérique. Dans le sens de la réception, le décodeur 15 convertit les signaux reçus par l'émetteur-récepteur 13 sur le circuit radio local 4 en données transmises au microprocesseur.

Le contrôleur 16 supervise directement certaines opérations de base concernant la communication radio locale. Notamment, il contrôle l'émission périodique par l'émetteur 13 d'un signal de balise destiné à tout terminal situé à portée d'émission de la borne 1. Le terminal mobile 2, en pénétrant dans la zone de portée de la borne 1, reçoit et identifie le signal de balise émis par la borne. Il émet à son tour sur le circuit radio local 4 un signal de requête de communication à destination de la borne émettrice de la balise.

Selon un mode de fonctionnement particulier, le contrôleur 16 commande aussi l'émission par la borne d'un signal de demande de dialogue contenant une interrogation sur le droit d'accès et le niveau de confidentialité dont dispose l'utilisateur du terminal 2, Le terminal mobile 2, suite à une validation opérée par l'utilisateur, émet un signal de réponse indiquant le niveau d'autorisation de dialogue selon lequel des services et des informations seront délivrées à l'utilisateur. La communication locale entre la borne 1 et le terminal 2 est établie selon un protocole d'établissement de liaison locale, qui peut être par exemple le protocole fixé par la technologie « Bluetooth ». Le contrôleur 16 modifie alors le menu d'accueil en fonction du niveau d'autorisation de dialogue et commande l'envoi de ce menu au terminal 2. Ce menu d'accueil, apparaissant par exemple sur l'écran de visualisation du terminal 2, propose à l'utilisateur des services que celui-ci peut sélectionner à l'aide du clavier.

L'offre de certains services, correspondant à des possibilités locales telles que, par exemple, des visites de musées dont les horaires et la programmation peuvent être consultés par le système de la présente invention, est adaptée en fonction de la localisation de l'utilisateur du terminal 2. En particulier, des informations concernant le départ de la prochaine visite guidée d'un monument peuvent n'être communiquées qu'à un terminal proche de ce monument et dont l'utilisateur est de ce fait susceptible d'être intéressé. Suite à la sélection d'un tel service, la borne 1 transmet au terminal 2 par le circuit radio local 4 le numéro d'appel du serveur de localisation 3 ainsi que son numéro d'identification. Suite à un appel émis par le terminal par le réseau de communication 5, le serveur lui renvoie les coordonnées de la position géographique de la borne. Le terminal 2 relaie alors ces coordonnées à la borne par le circuit de communication locale sans fil. En fonction de cette position, l'offre des services et les informations délivrées sont adaptées par la borne pour en accroître l'efficacité et la pertinence.

Cette offre de services correspond alors à des données enregistrées au niveau de la borne 1, dans la partie réinscriptible de la mémoire 12, et communiquées au terminal 2 par le circuit radio local 4. Mais ces données peuvent aussi être enregistrées au niveau d'un serveur distant, dont le numéro d'appel enregistré dans la mémoire 12 de la borne 1 est communiqué par celle-ci au terminal 2.

Lors de la fourniture de services d'intérêt local à l'utilisateur d'un terminal 2 situé à proximité d'une telle borne, la borne 1 dispose aussi de l'information de localisation sans interroger le serveur de localisation 3 par l'intermédiaire du terminal 2 et du réseau de communication 5. Cette information de localisation est en effet disponible au sein de la borne 1 grâce au récepteur de signaux de localisation 19 et au calculateur de coordonnées géographiques 20. La mise à jour, au niveau du serveur 3, de la table de correspondance entre les numéros d'identification de bornes et leurs positions n'est pas alors nécessaire pour des utilisations temporaires de bornes selon l'invention en des lieux variables, par exemple en liaison avec des programmes touristiques saisonniers.

Dans le cas où un service délivré à l'utilisateur du terminal 2 est fourni par un serveur distant 3 en utilisant le réseau de communication 5, la borne 1 peut aussi fournir si nécessaire directement ses coordonnées géographiques au serveur. Cette transmission est effectuée par le circuit radio local 4 jusqu'au terminal portable 2, puis par le réseau de communication 5 en utilisant la communication établie avec le serveur dont le numéro d'appel a été délivré par la borne 1 au terminal 2.

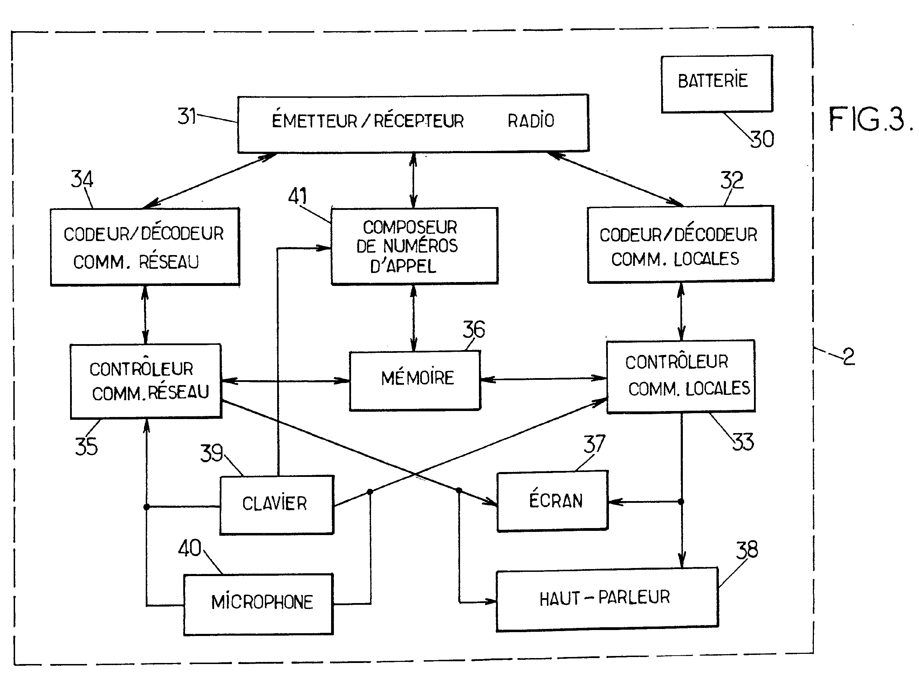

Selon le schéma de la figure 3, le terminal mobile 2 comprend un unique émetteur-récepteur radio 31, permettant de transmettre des signaux par le circuit de communication locale sans fil 4 lorsqu'il est commandé par le contrôleur 33 de communication locale, et de transmettre des signaux par le réseau de communication 5 lorsqu'il est commandé par le contrôleur 35 de communication par le réseau. Un codeur-décodeur 32/34 dédié à chaque mode de communication 4/5 convertit en signaux à émettre des données produites par le contrôleur correspondant 33/35. Dans le sens de la réception, chaque codeur-décodeur 32/34 décode les signaux reçus et transmet les données correspondantes au contrôleur 33/35 de sa voie de communication.

Le contrôleur 33 contrôle l'exécution du protocole d'établissement d'une communication locale sans fil avec une borne. Il assure notamment la reconnaissance de signaux de balise et de demande de dialogue émis par cette borne, et commande l'émission d'un signal de réponse comprenant une indication de niveau d'autorisation de dialogue.

Un dispositif de mémoire 36 est relié aux deux contrôleurs 33 et 35 et permet le transfert de données entre le circuit de communication locale 4 et le réseau 5. Ce transfert procède par inscription de données dans le dispositif de mémoire 36 par l'un des deux contrôleurs de communication 33/35 suivi de la lecture de ces données par l'autre contrôleur.

Un écran 37 et un haut-parleur 38 assurent la présentation à l'utilisateur de ce terminal d'informations produites par chaque contrôleur. Un clavier 39 et un microphone 40 transmettent aux contrôleurs 33 et 35 les entrées de l'utilisateur destinées à chaque voie de communication. Le clavier 39 est en outre relié au composeur de numéros d'appel 41 associé au réseau 5.

L'ensemble des composants du terminal 2 est alimenté par le circuit d'alimentation électrique 30.

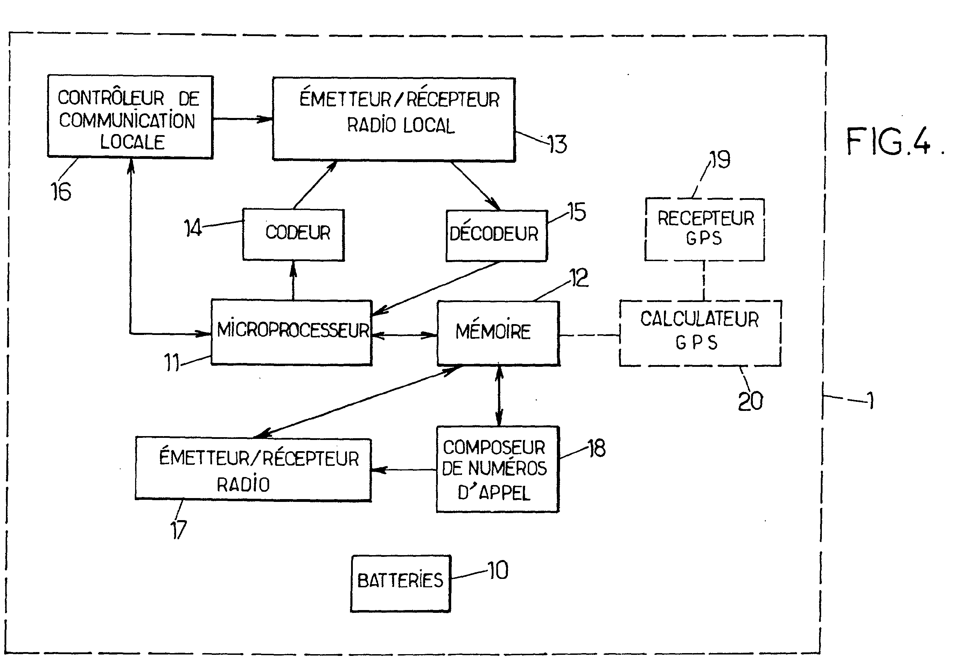

Le mode de réalisation de la borne 1 illustré par la figure 4 correspond à un fonctionnement autonome de celle-ci, dans le cas par exemple où la borne 1 est installée sur un site pour une durée provisoire. Afin de ne pas nécessiter de connexion à un réseau de distribution électrique, l'alimentation électrique 10 est une batterie. La faible consommation énergétique de la technologie de communication locale «Bluetooth» est particulièrement avantageuse dans cette configuration.

Pour une réalisation économique de la borne 1, le récepteur GPS 19 et le calculateur 20 peuvent être amovibles et servir lors de l'installation successives de multiples bornes. Ils sont alors reliés momentanément à la borne 1 lors de son installation afin de déterminer sa nouvelle position, puis déconnectés.

Selon la figure 4, la borne 1 comprend des composants de liaison directe au réseau de radiocommunication 5. Ces composants comprennent notamment un émetteur-récepteur de radiocommunication 17 et un composeur de numéros d'appel 18.

Lorsque la fourniture au terminal 2 d'un service sélectionné par son utilisateur requiert des données non-disponibles dans la borne, la borne établit directement une communication par le réseau 5 avec un serveur apte à fournir ces données. Elle les communique ensuite au terminal 2 par le circuit local 4.

Si la borne 1 dispose à la fois du récepteur 19 et du calculateur 20 GPS ainsi que des composants de liaison directe au réseau 5, selon le service requis par le terminal, la borne 1 transmet elle-même au serveur de services les coordonnées géographiques de sa position.

## Revendications

1. Système de communication comprenant une borne (1), au moins un terminal de communication (2) et au moins un serveur distant (3), le terminal et la borne comprenant chacun des moyens de communication locale sans fil, et le terminal et le serveur comprenant chacun des moyens de communication par l'intermédiaire d'un réseau de communication (5) indépendant de la borne, dans lequel le terminal comprend
- des moyens d'émission (31-33) par communication locale sans fil d'une interrogation à destination de la borne,
- des moyens de réception (31-33) par communication locale sans fil de données fournies par la borne en réponse à l'interrogation, et
- des moyens de transmission (31, 34-36) au serveur par le réseau de communication d'au moins une partie des données fournies par la borne en réponse à l'interrogation,
et dans lequel la borne comprend des moyens de réception (19) de signaux radio de localisation issus d'une constellation de satellites et des moyens (20) de calcul des coordonnées géographiques de ladite borne sur la base desdits signaux radio de localisation.

2. Système selon la revendication 1, dans lequel les données fournies par la borne comprennent un code d'identification de ladite borne.

3. Système selon la revendication 2, dans lequel le serveur comprend des moyens de transmission au terminal, en réponse à la réception de la part du terminal d'un code d'identification de borne, de coordonnées géographiques de la borne correspondant à ce code d'identification.

4. Système selon l'une quelconque des revendications précédentes, dans lequel le serveur comprend des moyens de transmission au terminal d'informations ou d'un menu de sélection en réponse à la réception de la part de ce terminal d'un code d'identification de borne.

5. Système selon l'une quelconque des revendications 1 à 4, dans lequel la borne comporte des moyens d'envoi au terminal par communication locale sans fil d'un menu d'accueil, et dans lequel le terminal comporte des moyens de réception de ce menu d'accueil, et des moyens de saisie d'une sélection dans ce menu faite par un utilisateur du terminal.

6. Système selon la revendication 5, dans lequel la borne comprend en outre des moyens pour modifier le menu d'accueil en fonction d'une indication de niveau d'autorisation de dialogue transmise par le terminal.

7. Système selon l'une quelconque des revendications précédentes, dans lequel la borne comprend en outre des moyens de communication à distance (17, 18) avec le serveur.

8. Système selon la revendication 7, dans lequel la borne comprend
- des moyens de transmission de données au serveur en réponse à une interrogation émise par le terminal à destination de la borne par communication locale sans fil,
- des moyens de réception d'éléments de réponse émis par le serveur à destination de la borne en réponse aux données transmises par la borne au serveur,
- des moyens de traitement (11) des éléments de réponse fournis par le serveur pour produire une réponse à l'interrogation du terminal, et
- des moyens de transmission de la réponse au terminal par communication locale sans fil.

9. Système selon la revendication 7 ou 8, dans lequel les moyens de communication à distance de la borne comprennent des moyens de radiocommunication.

10. Système selon la revendication 8, dans lequel les données transmises par la borne au serveur comprennent les coordonnées géographiques de ladite borne.

11. Terminal de communication (2) adapté pour communiquer avec une borne (1) selon l'une quelconque des revendications précédentes, le terminal comprenant
- des moyens de communication locale sans fil (31-33),
- des moyens d'émission par communication locale sans fil d'une interrogation à destination d'une borne,
- des moyens de réception par communication locale sans fil de données fournies par la borne en réponse à l'interrogation,
- des moyens de communication (31, 34, 35) par l'intermédiaire d'un réseau de communication (5) indépendant de la borne, et
- des moyens de transmission (36) à un serveur par le réseau de communication d'au moins une partie des données fournies par la borne en réponse à l'interrogation.
